## Europäisches Patentamt

## European Patent Office

## Office européen des brevets

(11) Veröffentlichungsnummer: **0 084 319**
**B1**

(12) # EUROPÄISCHE PATENTSCHRIFT

(45) Veröffentlichungstag der Patentschrift:
04.06.86

(51) Int. Cl.⁴: **B 01 D 53/14**, C 07 C 7/11, C 10 K 1/16

(21) Anmeldenummer: 83100037.7

(22) Anmeldetag: 04.01.83

(54) Verfahren zur Trocknung und Entfernung von Kohlenwasserstoffen aus bzw. von Gasen.

(30) Priorität: 19.01.82 DD 236847

(43) Veröffentlichungstag der Anmeldung:
27.07.83 Patentblatt 83/30

(45) Bekanntmachung des Hinweises auf die Patenterteilung:
04.06.86 Patentblatt 86/23

(84) Benannte Vertragsstaaten:
DE FR GB IT NL

(56) Entgegenhaltungen:
DD - A - 128 319
FR - A - 2 341 643

(73) Patentinhaber: **VEB Chemieanlagenbaukombinat Leipzig-Grimma, Bahnhofstrasse 3-5, DDR-7240 Grimma (DD)**

(72) Erfinder: **Schlicht, Burkhard, Dipl.-Ing., Lehnestrasse 31, DDR-1138 Berlin (DD)**
Erfinder: **Sonntag, Christel, Dipl.-Ing., Werner-Lamberzstrasse 86, DDR-1136 Berlin (DD)**
Erfinder: **Beise, Hans, Dipl.-Ing., Schieritzstrasse 19, DDR-1055 Berlin (DD)**
Erfinder: **Lindner, Otto, Hagedornstrasse 54, DDR-1197 Berlin (DD)**
Erfinder: **Wehner, Klaus, Dr. rer.nat., Hocker Gasse 1, DDR-4220 Leuna (DD)**
Erfinder: **Burk, Werner, Dr. rer.nat., Block 247, DDR-4090 Halle-Neustadt (DD)**
Erfinder: **Gross, Manfred, Dr. rer.nat., Strasse der Einheit 17, DDR-9200 Freiberg (DD)**
Erfinder: **Minak, Peter, Dr.-Ing., Am Seilerberg 23, DD-9200 Freiberg (DD)**

(74) Vertreter: **Hansen, Bernd, Dr.rer.nat. et al, Hoffmann, Eitle & Partner Patentanwälte Arabellastrasse 4, D-8000 München 81 (DE)**

## Beschreibung

Die Erfindung betrifft ein Verfahren zur Trocknung und Entfernung von Benzolkohlenwasserstoffen einschliesslich Naphthalin aus bzw. von Gasen, insbesondere kohlenwasserstoffhaltige technische und natürliche Gase, vorzugsweise Kohleentgasungs- und Spaltgase, mit Lösemitteln in Absorptions- und Desorptionsapparaten.

Es sind Verfahren bekannt, die den Wasserdampftaupunkt von Gasen mit dem Ziel herabsetzen, dass in nachfolgenden Einrichtungen der Gasbehandlung, -fortleitung und -verteilung unter den gegebenen Bedingungen keine Kondensation erfolgt. Für die Trocknung von Gasen zur öffentlichen Gasversorgung oder für den Erdgastransport über grössere Entfernungen wird bevorzugt die Absorption an Glykollösungen vorgenommen, wobei die notwendigen Taupunkte bis zu –20 °C sicher erreicht werden (H. Franik, Erdgasaufbereitung, S. 121–133, VEB Deutscher Verlag für Grundstoffindustrie, Leipzig 1964).

Besteht die Forderung nach noch tieferen Taupunkten, wie z.B. vor Erdgaszerlegungsanlagen bis zu –70°C, so ist es bekannt, Adsorbentin wie Kieselgel oder Molekularsiebe einzusetzen (Kohl, Riesenfeld; Gaspurification, S. 571–578, Gulf Publishing Company Houston Texas 1974).

Die in Gasen aus der Kohleentgasung und Ölvergasung enthaltenen Benzolkohlenwasserstoffe und Naphthalin werden nach Grosskinsky (Handbuch des Kokereiwesens, Band I, S. 137–173, Karl-Knapp-Verlag Düsseldorf 1958) in Absorptionsanlagen unter Einsatz von höhersiedenden Waschölfraktionen entfernt.

Des weiteren ist es bekannt, Benzolkohlenwasserstoffe und Naphthalin an Aktivkohle zu adsorbieren, wodurch diese Komponenten soweit entfernt werden, dass eine Kondensation bzw. Sublimation in den nachfolgenden Einrichtungen der Gasbehandlung, -fortleitung und -verteilung unter den jeweiligen Druck- und Temperaturbedingungen nicht auftritt (Schmidt, Verfahren der Gasaufbereitung, S. 174 ff, VEB Deutscher Verlag für Grundstoffindustrie, Leipzig 1970).

Weiterhin sind Verfahren bekannt, bei denen durch indirekte Abkühlung des Gasstromes die Taupunkte für Wasserdampf, Benzolkohlenwasserstoffe und Naphthalin herabgesetzt werden (Ullrich, Koksofengasaufarbeitung-Naphthalinabtrennung; Erdöl und Kohle (1977) 6, 263 bis 267).

Diese bekannten Verfahren sind mit entscheidenden Nachteilen behaftet, wenn die Entfernung von Benzolkohlenwasserstoffen, Naphthalin und Wasser mit möglichst niedrigem Apparate-, Hilfsstoff- und Energieaufwand in einer Stufe erfolgen soll.

So zeigen die für die Gastrocknung eingesetzten Glykollösungen, beispielsweise Di- oder Triäthylenglykol, nur ein geringes Absorptionsvermögen für Benzolkohlenwasserstoffe und Naphthalin (DE-A 2 449 864). Dies hat zur Folge, dass die überwiegenden Anteile dieser Komponenten im Gas verbleiben, wodurch die notwendigen Grenzwerte für die Benzolkohlenwasserstoffe und für Naphthalin nicht erreicht werden. Beim Betreiben einer Glykolabsorptionsanlage treten deshalb erhebliche Betriebsstörungen auf, weil bei geringfügiger Abkühlung des Gases die Benzolkohlenwasserstoffe in flüssiger und Naphthalin in kristalliner Form anfallen. Um die Gastrocknung mit Glykol sicher betreiben zu können, ist daher eine Aktivkohle-Anlage vorzuschalten, damit eine Entfernung dieser Komponenten erfolgen kann.

Die geringe Gasgeschwindigkeit in den Absorbern bedingt grosse Apparate und beträchtliche Aktivkohlemengen. Des weiteren erfordert die Desorption erhebliche Dampfmengen, was einen sehr hohen Energieaufwand verursacht. Die Folge sind hohe Investitions- und Betriebskosten.

Betrachtet man die Entfernung von Benzolkohlenwasserstoffen und Naphthalin in Absorptionsanlagen, die mit hochsiedenden Waschölen arbeiten, so tritt der Nachteil auf, dass einerseits bei der üblichen Normaldruckabsorption die notwendigen Endgehalte für die Gasfortleitung und -verteilung unter Druck nicht einzuhalten sind, und andererseits eine Absenkung des Wasserdampftaupunktes nicht möglich ist.

Die Nutzung der indirekten Gaskühlung zur Taupunktherabsetzung hat den Nachteil, dass eine hohe Kälteleistung zur Abkühlung des gesamten Gasstromes aufzubringen ist. Des weiteren bilden sich mit der Kondensation feine Nebel, die selbst mit Hochleistungsabscheidern kaum abscheidbar sind.

Die FR-A 2 341 643 betrifft ein Verfahren zur Reinigung von technischen Gasen, und zwar von höheren Kohlenwasserstoffen wie Isoparaffin und/oder organischen Schwefelverbindungen sowie zur Trocknung des Erdgases. Durch eine mehrstufige Entspannung nach Beaufschlagung mit einem Lösemittelgemisch aus N-Methyl-ε-Caprolactam, Glykolen und/oder deren Mischungen mit Alkanolaminen wird die gleichzeitige Trocknung und/oder vollständige Entfernung der organischen Schwefelverbindungen der Sauergase und der höheren Kohlenwasserstoffe erreicht.

Aus der DD-A 128 319 ist ein Verfahren zur Vermeidung der Rückstandsbildung in Selektivextraktions-Lösungsmittelgemischen bekannt, bei dem zur Verminderung hochsiedender, undestillierbarer Rückstände während der Aromatenextraktion Wasser in Höhe von 0,5 bis 3,0 Gew.% zum Lösemittel zugesetzt wird. Die Reduzierung der Rückstände durch Wasserzusatz tritt gemäss DD-A 128 319 überraschend ein, obwohl normalerweise die cyclischen Carbonsäureamide infolge hydrolytischen Wasserangriffs auf die Armidgruppen bei Temperaturen von 150 bis 180°C zur Polymerenbildung neigen.

Das Ziel der Erfindung besteht in der Erhöhung des Absorptionsvermögens des Lösemittels für Benzolkohlenwasserstoffe einschliesslich Naphthalin und Wasser, in der Senkung der Investitions- und Betriebskosten, in der Einsparung von Energie und Material sowie in der Vermeidung von Betriebsstörungen und in der Erhöhung der Sicherheit.

Der Erfindung liegt die Aufgabe zugrunde, die Entfernung der Benzolkohlenwasserstoffe einschliesslich Naphthalin und Wasser aus Kohleentgasungs- und Spaltgasen oder anderen kohlenwasserstoffhaltigen Gasen gleichzeitig durchzuführen und die Kondensation der aromatischen Kohlenwasserstoffe bzw. die Sublimation des Naphthalins sicher zu verhindern.

Erfindungsgemäss wird die Aufgabe dadurch gelöst, dass als Lösemittel ein Gemisch aus 79,9 bis 97 Gew.% Glykol, 2 bis 20 Gew.% N-Methyl-ε-Caprolactam und 0,1 bis 1 Gew.% Wasser verwendet wird und dass die Regeneration des beladenen Lösemittelgemisches unter Normaldruck thermisch bei Temperaturen zwischen 150 bis 190°C, vorzugsweise 170°C, erfolgt.

In einem weiteren Merkmal der Erfindung werden 3 bis 15 Gew.%, vorzugsweise 10 Gew.%, Rohbenzol dem beladenen Lösemittelgemisch zugesetzt.

Durch das erfindungsgemässe Verfahren tritt der überraschende Effekt einer fast vollständigen Absorption der Benzolkohlenwasserstoffe einschliesslich Naphthalin bei gleichzeitiger Wasserdampfentfernung auf. Der Überraschende Effekt besteht weiterhin darin, dass bei der unter Normaldruck stattfindenden Regeneration des Lösemittelgemisches bei Temperaturen unterhalb des Siedepunktes von Naphthalin zwischen 150 bis 190°C trotzdem alle absorbierten Komponenten, also auch Naphthalin, über Kopf die Destillationskolonne verlassen, d.h. dass das regenerierte Lösemittelgemisch nahezu frei von diesen Komponenten und die Regeneration vollständig erfolgt ist. Ausserdem ist der Wassergehalt im regenerierten Lösemittelgemisch um etwa eine Zehnerpotenz kleiner als es bei reinen Glykol-Wasser-Gemischen unter den gleichen Regenerationsbedingungen der Fall ist. Dadurch lassen sich überhaupt nur Wasserdampftaupunkte im gereinigten Gas erzielen, die man auch mit normalen Glykoltrocknungsanlagen erreicht, bei denen dann allerdings die Regenerationstemperatur beispielsweise für Triäthylenglykol mindestens 210 bis 220°C betragen muss.

Das erfindungsgemässe Verfahren zeichnet sich daher auch dadurch aus, dass eine komplette Feinreinigung, beispielsweise eine Aktivkohle-Anlage, eingespart wird. Ausserdem tritt eine erhebliche Einsparung an Elektroenergie, Wasserdampf und Kühlwasser auf. Von wesentlicher Bedeutung ist die Erhöhung des Absorptionsvermögens des Lösemittelgemisches für Benzolkohlenwasserstoffe, Naphthalin und Wasser. Gleichzeitig wird die Kondensation bzw. Sublimation der Benzolkohlenwasserstoffe einschliesslich Naphthalin bei der Gasbehandlung, -fortleitung und -verteilung sicher verhindert.

Die Erfindung soll nachstehend an zwei Ausführungsbeispielen näher erläutert werden.

Beispiel 1

Spaltgas mit folgenden Parametern soll sowohl getrocknet als auch von Benzolkohlenwasserstoffen einschliesslich Naphthalin gereinigt werden:

| – Gasmenge | 3 900 | m³/h |
|---|---|---|
| – Gaszusammen- | | |
| setzung | | |
| H₂ | 56 bis 61 | Vol.% |
| CO | 7 bis 13 | Vol.% |
| CH₄ | 3 bis 8 | Vol.% |
| CₘHₙ | 1 bis 2 | Vol.% |
| CO₂ | 12 bis 13 | Vol.% |
| N₂ | 9 bis 12 | Vol.% |
| Benzolkohlen- | 3 | g/m³ i.N. |
| wasserstoffe | | |
| Naphthalin | 5 | g/m³ i.N. |
| – Temperatur | 25 bis 30°C | wasserdampfgesättigt |
| – Gasdruck | 1,4 bis 1,7 | MPa |

Das gereinigte Gas soll einen Wasserdampftaupunkt von ≤ –5°C erreichen und ein Gehalt an Benzolkohlenwasserstoffen von kleiner 2,3 g/m³ i.N. sowie ein Naphthalingehalt von kleiner 0,33 g/m³ i.N. aufweisen.

Als Lösemittel findet ein Gemisch Verwendung, das aus 84,2 Gew.% Triäthylenglykol, 15,0 Gew.% N-Methyl-ε-Caprolactam und 0,8 Gew.% Wasser besteht. Das Verfahren wird in einer üblichen Gastrocknungsanlage, bestehend aus den Hauptausrüstungen, Absorptionsapparat und Regenerationseinrichtung, durchgeführt. Die Regenerationstemperatur des beladenen Lösemittelgemisches beträgt 177°C.

Das Reingas hat einen Gehalt von 1,66 bis 2,1 g/m³ i.N., Benzolkohlenwasserstoff und < 0,1 g/100 m³ i.N. Naphthalin. Der erreichte Wasserdampftaupunkt liegt bei < –8°C.

Beispiel 2

In einer Absorptions- und Regenerationseinrichtung sollen 65 000 m³ i.N./h Mischgas mit folgenden Parametern getrocknet und von Benzolkohlenwasserstoffen sowie Naphthalin gereinigt werden:

| – mittlere Gaszusammensetzung | |
|---|---|
| CO₂ | 4,5 Vol.% |
| O₂ | 0,5 Vol.% |
| CO | 13,0 Vol.% |
| H₂ | 55,8 Vol.% |
| CH₄ | 14,6 Vol.% |
| N₂ | 8,6 Vol.% |
| CₘHₙ | 2,6 Vol.% |
| Schwefelverbindungen | 0,4 Vol.% |

Die aromatischen Kohlenwasserstoffe bestehen aus 2,5 g/m³ i.N. Benzolkohlenwasserstoffe und 0,8 g/m³ i.N. Naphthalin.

| – Gastemperatur | 25°C wasserdampfgesättigt |
|---|---|
| – Gasdruck | 2,5 MPa |

Das Reingas soll folgende Qualität erreichen:

- Wasserdampftaupunkt      $\leqslant -5°C$
- Benzolkohlenwasserstoffe    $\leqslant 1,4\,g/m^3\,i.N.$
- Naphthalin      $\leqslant 0,1\,g/m^3\,i.N.$

Als Lösemittel wird ein Gemisch aus 90 Gew.% Triäthylenglykol, 9,5 Gew.% N-Methyl-ε-Caprolactam und 0,5 Gew.% Wasser eingesetzt. Die Regeneration des beladenen Lösemittelgemisches erfolgt bei 170°C. Bei der Regeneration des beladenen Lösemittelgemisches wird dem Lösemittelgemisch 10 Gew.% Rohbenzol zugesetzt. Am Kopf der Kolonne erhält man durch Kondensation der Dämpfe ein flüssiges Gemisch, das sich leicht durch die Schwerkraft in eine wässrige und organische Phase trennt, wobei die organische Phase das Naphthalin gelöst enthält und als Verkaufsprodukt zur Verfügung steht.

Das Reingas enthält 1,0 $g/m^3$ i.N. Benzolkohlenwasserstoffe und weniger als 0,1 $g/m^3$ i.N. Naphthalin. Der Wasserdampftaupunkt beträgt $< -8°C$.

Verringert man den Wasseranteil im Lösemittelgemisch von 0,5 auf 0,1 Gew.%, so erreicht man mühelos Wasserdampftaupunkte unter −15°C, ohne dass die Entfernung des Naphthalins und der Benzolkohlenwasserstoffe beeinträchtigt wird.

Anstelle des Triäthylenglykol kann beispielsweise auch Diäthylenglykol als Gemischpartner im Lösemittelgemisch verwendet werden.

## Patentansprüche

1. Verfahren zur Trocknung und Entfernung von Benzolkohlenwasserstoffen einschliesslich Naphthalin aus bzw. von Gasen, insbesondere kohlenwasserstoffhaltige technische und natürliche Gase, vorzugsweise Kohleentgasungs- und Spaltgase, mit Lösungsmitteln in Absorptions- und Desorptionsapparaten, gekennzeichnet dadurch, dass als Lösemittel ein Gemisch aus 79,9 bis 97 Gew.% Glykol, 2 bis 20 Gew.% N-Methyl-ε-Caprolactam und 0,1 bis 1 Gew.% Wasser verwendet wird und dass die Regeneration des beladenen Lösemittelgemisches unter Normaldruck thermisch bei Temperaturen zwischen 150 bis 190°C, vorzugsweise 170°C, erfolgt.

2. Verfahren nach Anspruch 1, gekennzeichnet dadurch, dass dem beladenen Lösemittelgemisch 3 bis 15 Gew.%, vorzugsweise 10 Gew.%, Rohbenzol zugesetzt wird.

## Claims

1. Process for drying gases, particularly hydrocarbon-containing natural and technical gases, especially coal degasification gases and product gases, and for the removal of benzene hydrocarbons including naphthalene from the same, with solvents in absorption/desorption apparatuses, characterized in that a mixture of 79.9 to 97% w/w glycol, 2 to 20% w/w N-methyl-ε-caprolactam and 0.1 to 1% w/w water is used as solvent, and that the regeneration of the spent solvent is achieved by heating at 150°C to 190°C, preferably 170°C, at normal pressure.

2. Process according to claim 1, characterized in that 3 to 15% w/w, preferably 10% w/w, crude benzene is added to the spent solvent.

## Revendications

1. Procédé pour le séchage et l'élimination des hydrocarbures benzéniques, y compris la naphtaline, de gaz, en particulier de gaz naturels et techniques contenant des hydrocarbures, de préférence les gaz de gazéfication du charbon et les gaz de craquage, au moyen de solvant, dans des appareillages d'absorption et de désorption, caractérisé en ce que l'on utilise comme solvant un mélange constitué de 79,9 à 97% en poids de glycol, de 2 à 20% en poids de N-méthyl-ε-caprolactame, et de 0,1 à 1% en poids d'eau, et que l'on effectue la régénération du mélange de solvants chargé sous pression normale par voie thermique à des températures comprises entre 150 et 190°C, de préférence à 170°C.

2. Procédé selon la revendication 1, caractérisé en ce que l'on ajoute au mélange de solvants chargé 3 à 15% en poids, de préférence 10% en poids, de benzène brut.